# EUROPEAN PATENT SPECIFICATION

(11) **EP 3 259 095 B1**
(45) Date of publication and mention of the grant of the patent: **12.06.2019**
(21) Application number: 16704595.4
(22) Date of filing: 11.02.2016
(51) Int. Cl.: B23K 35/30, B23K 35/02, C22C 19/05, B23K 1/008, B23K 1/19, C22C 1/02, C22C 30/00, B23K 101/14, B23K 103/04

(54) **NICKEL BASED ALLOY SUITABLE FOR BRAZING SUPER AUSTENITIC STEEL**
NICKELBASIERTE LEGIERUNG ZUM HARTLÖTEN VON SUPERAUSTENITISCHEM STAHL
ALLIAGE À BASE DE NICKEL APPROPRIÉ POUR LE BRASAGE D'ACIERS SUPER-AUSTÉNITIQUES

(30) Priority: 17.02.2015 EP 15155359
(43) Date of publication of application: 27.12.2017
(73) Proprietor: Höganäs AB (publ), 263 83 Höganäs (SE)
(72) Inventor: PERSSON, Ulrika, 26040 Viken (SE); MÅRS, Owe, 26361 Viken (SE)
(86) International application number: PCT/EP2016/052906
(87) International publication number: WO 2016/131702

(56) References cited:
- EP-A1- 0 418 606
- GB-A- 2 238 058
- JP-A- 2006 231 405
- JP-A- 2008 253 999
- US-A1- 2011 250 470
- DATABASE WPI Week 201303 1 February 2013 (2013-02-01) Thomson Scientific, London, GB; AN 2012-R51260 XP002743362, -& CN 102 672 368 A (TIANJIN NORTH COATING MATERIAL CO LTD) 19 September 2012 (2012-09-19)
- DATABASE WPI Week 200910 1 March 2009 (2009-03-01) Thomson Scientific, London, GB; AN 2009-E34166 XP002743363, -& CN 101 342 646 A (TIANJIN CAST METAL SURFACE ENG MATERIALS SCI&TECHNOLOGY) 14 January 2009 (2009-01-14)

## Description

### FIELD OF THE INVENTION

This invention relates to an nickel based brazing filler metal suitable for brazing components made of super austenitic stainless steel or components made of similar materials when high corrosion resistance is required, for example in chloride environments. Typical examples of products made from the brazed components are heat exchangers. The invention relates also to a brazing method.

### BACKGROUND

Brazing is a process for joining metal parts with the help of brazing filler metal and heating. The melting temperature of a brazing filler metal is below the melting temperature of the base material but above 450°C. Below this temperature the joining process is called soldering. The most commonly used brazing filler metals for brazing stainless steels are based on copper or nickel. Copper based brazing filler metals are preferred when considering cost advantages while nickel based brazing filler metals are needed in high corrosion and high temperature application. Copper is for example often used for heat exchangers for district heating and for tap water installations.

Nickel based brazing filler metals with high chromium content are used for their high corrosion resistance in applications exposed to corrosive media. Nickel based brazing filler metals may also be used in high service temperature applications. A typical application exposed to high corrosive environment is heat exchangers for cooling with aggressive cooling media.

There are several different types of nickel based brazing filler metals listed in the American Welding Society (ANSI/AWS A 5.8) standard. Many of these nickel based brazing filler metals are used for brazing heat exchangers. BNi-2 with the composition Ni-7Cr-3B-4,5Si-3Fe (7% by weight of Ni, 3% by weight of B, 4.5% by weight of Si, 3% by weight of Fe and balanced with Ni) is used for producing high strength joints in high temperature applications. The presence of boron is however a disadvantage since it may cause embrittlement of the base material when boron is diffused into the base material. The diffusion of boron may also cause local reduction in corrosion resistance as CrB is formed at the grain boundaries. Other nickel based brazing filler metal containing boron has the same disadvantage.

To overcome the disadvantage of boron other nickel based brazing filler metals were developed. BNi-5 (Ni-19Cr-10Si) has high corrosion resistance due to the high chromium content. The brazing temperature for this alloy is rather high (1150-1200°C) and when only using silicon as melting point depressant the flowability is limited. Other boron free nickel based brazing filler metals are BNi-6 (Ni-10P) and BNi7 (Ni-14Cr-10P). The brazing temperatures for these brazing filler metals are lower due to the high content of phosphorous of 10wt% which also renders the brazing filler metals excellent flow properties. The high phosphorous content (10wt%) may however form a brazed joint without the required strength due to the risk to form phosphorous containing brittle phases.

Another nickel based brazing filler metal is described in patents US6696017 and US6203754.This brazing filler metal has the composition Ni-29Cr-6P-4Si and combines high strength and high corrosion resistance with a fairly low braze temperature (1050-1100°C). This brazing filler metal was specially developed for a generation of EGR coolers used in high corrosive environment.

Another nickel based filler metal is described in US patent application US2013/0224069A1. This document describes a brazing filler metal with good corrosion resistance to hydrochloric acid. The alloy contains 6-18wt% molybdenum, 10-25wt% chromium, 0.5-5wt% silicon, 4.5-8wt% phosphorous and the remainder being nickel and unavoidable impurities. The various alloys described have liquidus temperatures of 1120°C or lower.

The Japanese patent application JP2008 253999A discloses a high temperature corrosion resistant Ni-based welded structure obtained by welding and joining pieces containing 45-75% Ni, 23-35% Cr, 1-5% Mo, 3-6% Si and 0.05-0.5% C, balanced with Fe and inevitable impurities. The deposited material in the weld zone contains a first deposited material having a toughness higher than the pieces to be welded, and a second deposited material having the same chemical composition as the pieces to be welded. The second deposited material facing the high temperature corrosive atmosphere.

The highest practical temperature consistent with limited grain growth according to ASM speciality hand book Stainless Steel is 1095°C. Therefore a brazing temperature below this is preferred to avoid the problems with grain growth in the stainless steel component.
Super austenitic stainless steels, like Type 254 SMO® or Type 654SMO® from Outokumpu, is less prone to be subjected to grain growth at elevated temperatures. However, in such steels brittle sigma phases are easily formed around 1050°C. Brazing of components subjected to corrosive environments, made from super austenitic stainless steels, with nickel based brazing filler metal is difficult and challenging. The reasons are e.g. that sufficiently high brazing temperature has to be applied in order to avoid formation of brittle sigma and chi phases during the solidification of the joint but the brazing temperature has to be low enough to prevent erosion of the base material. The brazing metal must also have good enough flow in order to effectively fill gaps and crevices.
This makes most existing brazing alloys unsuitable for brazing super austenitic steels. BNi 5 has a melting interval suitable for brazing super austenitic stainless steel. However, the corrosion resistance of BNi 5 is insufficient to function with these types of steels in the environment the steels are designed for.
The conventional nickel based filler metals with best corrosion resistance, Ni-29Cr-6P-4Si, does not work with the super austenitic stainless steel grades in chloride environment. While Ni-29Cr-6P-4Si has good enough corrosion resistance, the solidus temperature is too low to avoid formation of sigma phases in the base material during cooling which deteriorates the properties of the super austenitic stainless steel. Thus, there is a need for a nickel based brazing filler metal having a solidus temperature above 1140°C and being able to form joints which can withstand corrosive chloride containing environments.

### SUMMARY

The invention discloses a nickel based brazing filler metal in form of an alloy containing or consisting of between 20wt% and 35wt% chromium, between 7wt% and 15wt% iron and between 2.5wt% and 9wt% silicon, between 0wt% and 15wt% molybdenum, unavoidable impurities and the balance being nickel. The solidus temperature of the brazing filler shall be between 1140°C and 1220°C. The brazing filler metal is suitable for production of catalytic converters and heat exchangers.

The invention also discloses a brazing method.

### DETAILED DESCRIPTION

In one aspect of the present invention there is provided a brazing filler metal with superior corrosion resistance matching super austenitic stainless steels. Examples of products suitably brazed with the new nickel based brazing filler metal are heat exchangers, such as plate- or tube heat exchanger that are used in industrial applications or automotive applications such as in exhaust gas cooling systems. Catalytic converters of different types are also possible applications made from super austenitic stainless steels. The new brazing filler metal may also be used for brazing of conventional stainless steel grades.

In another aspect of the present invention there is provided a brazing method involving the use of the new brazing filler metal for brazing super austenitic stainless steels. In a further aspect there is provided a brazed product.

In order to avoid formation of brittle sigma phases, forced cooling from at least 1050°C to at most 600°C has to be applied. The solidus temperature of the brazing metal has to be at least 1140°C in order to ensure complete solidification of the brazing joint before rapid cooling is applied, otherwise there is a risk of forming cracks and voids in the joint during rapid cooling.

The brazing filler material in the form of powder, paste, tape, foil or other forms is placed at the gap or in the gap between the surfaces of the base materials which are to be joined. The package is placed in an oven in a reducing protective atmosphere or in vacuum, and heated to a temperature above the liquidus temperature, at least above 1200°C, and kept at that temperature until completed brazing, i.e. the brazing filler metal is melt and by capillary forces the melted brazing filler metal wets the surface of the base material and flows into the gap. During cooling below the solidus temperature a solid brazed joint is formed. When the solid joint is formed the brazed component can be subjected to forced cooling, which means that the component is subjected to a stream of an inert cooling gas under high pressure, typical at least 10 bar.

Thus, a brazing method according to the present invention will encompass the following steps;
a) applying a brazing filler metal material according to any of the embodiments according to the present invention to at least one part of stainless steel or to a combination of parts of stainless steel and if applicable assembling parts of stainless steel to an article,
b) heating the article to the brazing temperature, a temperature above the liquidus temperature of the brazing filler metal, at least above 1200°C,
c) holding the part(s) at the brazing temperature until complete brazing is obtained,
d) cooling the brazed parts to a temperature below solidus of the brazed joint,
e) cooling the brazed parts from a temperature of at least 1050°C to 600°C or below at a cooling rate of at least 2°C/second with an inert cooling gas at a pressure of at least 10 bar,
f) recovering the article.

In one embodiment of the brazing method according to the invention forced cooling at a rate of at least 2°C/second from at least 1050°C to at most 600°C is used.
In one embodiment of the brazing method according to the invention forced cooling at a rate of at least 2°C/second from at least 1120°C to at most 600°C has to be applied.
In one embodiment of the brazing method according to the invention forced cooling at a rate of at least 5°C/second from at least 1050°C to at most 600°C is used.
In one embodiment of the brazing method according to the invention forced cooling at a rate of at least 5°C/second from at least 1100°C to at most 600°C has to be applied.
In one embodiment of the brazing method according to the invention forced cooling at a rate of at least 5°C/second from at least 1120°C to at most 600°C has to be applied.
In one embodiment of the brazing method according to the invention forced cooling at a rate of at least 7°C/second from at least 1050°C to at most 600°C is used.
In one embodiment of the brazing method according to the invention forced cooling at a rate of at least 7°C/second from at least 1100°C to at most 600°C has to be applied.
In one embodiment of the brazing method according to the invention forced cooling at a rate of at least 7°C/second from at least 1120°C to at most 600°C has to be applied.

According to one embodiment the brazing filler metal may be provided in powder form. The formation into powder of the brazing filler metal may be accomplished using methods known in the art. For example, powders having the composition defined in the claims can be made by melting a homogeneous alloy and converting them to a powder by an atomization process. The mean particle size of the powder can range between 10 - 150µm, preferably between 20 - 100µm and most preferably between 30-70µm. The mean particle size may be determined by using the method described in EN24497 or expressed as median particle diameter X₅₀ according SS-ISO 13320-1. Mean particle size or median particle diameter shall here be interpreted as the size of a particle in a population of particles where 50% by volume or weight of the population is smaller than this size and 50% by volume or weight is larger than this size.

Typical super austenitic stainless steel grades are found in Table 1. Other such steel grades are AL6XN and 925hMo. Super austenitic stainless steel may be defined as an austenitic stainless steel containing nickel, chromium, molybdenum and nitrogen and having PREN No. above 45, defined according to ASM Handbook Volume 13A, 2003. PREN No. here given by the equation PREN No.=%Cr+3.3*%Mo+30*%N. The high molybdenum content together with high chromium and nitrogen contents has given these grades excellent corrosion resistance and improved mechanical properties.

**Table 1. Example of Super austenitic stainless steel**

| | Outokumpu 254 SMO® (UNS S31254) | UNS S34565 | Outokumpu 654 SMO® (UNS S32654) |
|---|---|---|---|
| C | 0.020 max | 0.020 max | 0.020 max |
| Cr | 19.5-20.5 | 24 | 24.0-25.0 |
| Ni | 17.5-18.5 | 17 | 21.0-23.0 |
| Mo | 6.0-6.5 | 4.5 | 7.0-8.0 |
| N | 0.18-0.22 | 0.45 | 0.45-0.55 |
| Cu | 0.50-1.00 | | 0.30-0.60 |
| S | 0.010 max | | 0.005 max |
| P | 0.030 max | | 0.030 max |
| Si | 0.80 max | | 0.50 max |
| Mn | 1.00 max | 5.5 | 2.00-4.00 |
| Fe | Balance | Balance | Balance |

All stainless steel contain by definition a minimum of 11% chromium, few stainless steels contain more than 30% chromium. Chromium content above 11% is required for the formation of the protective chromium oxide layer which gives the steel its corrosion resistant characteristics. The higher chromium content, the better corrosion resistance but when the content increases, the flow properties are negatively affected and brazing alloys with chromium content above 25 % are very rarely used. Chromium contents above 35% may cause decrease in the joint strength as several intermetallic phases are created.
Thus the chromium content of the new brazing filler metal is between 20 and 35wt%, preferably between 25-33wt%. In some embodiments more narrow intervals may be desired.
To reduce the melting point of the alloy a melting point depressants are added.
It is well known that silicon, boron and phosphorous is effective melting point depressants.
Commonly a combination of at least two melting point depressants is used in brazing filler metals in order to obtain sufficient properties, such as wetting and flow. In the present invention it has however been shown that at only silicon can be used, facilitating production of the brazing filler metal and handling when used.
A content of silicon above 9wt% is not suitable since the risk for brittle phase formation is too high and content below 2.5wt% renders the brazing filler metal insufficient flow properties. The silicon content of the brazing filler metal is therefore 2.5-9wt%. In some embodiments more narrow intervals may be desired.
The new brazing filler metal contains iron between 7-15wt%, preferably between 8-12wt% in order to obtain sufficient flow properties and molybdenum between 0-15wt%, preferably between 5-10wt%, preferably between 6-10wt% and most preferably between 7-10wt%. In some embodiments more narrow intervals may be desired.
Unavoidable impurities are normally components which are present in an amount lower than 2wt%, preferably lower than1wt% and in such a small amount that the presence of the component does not substantially influence the properties of the brazing filler material. Carbon may in this context be regarded as an unavoidable impurity and in certain embodiments of the present invention the carbon content shall be below 0.05% by weight.
The constituents of the brazing filler metal are contained in prealloyed form.

In one embodiment of the present invention the nickel based brazing filler metal comprises:

| | |
|---|---|
| Cr: | 25-35wt% |
| Fe: | 7-15wt% |
| Si: | 3-8wt% |
| Mo: | 5-10wt% |
| Inevitable impurities | 1wt% max, whereof C is below 0.05% |
| Balanced with nickel (Ni). | |

In another embodiment of the present invention the nickel based brazing filler metal comprises:

| | |
|---|---|
| Cr: | 25-35wt% |
| Fe: | 7-15wt% |
| Si: | 3-8wt% |
| Mo: | 6-10wt% |
| Inevitable impurities | 1wt% max, whereof C is below 0.05% |
| Balanced with nickel (Ni). | |

In another embodiment of the present invention the nickel based brazing filler metal comprises:

| | |
|---|---|
| Cr: | 25-33wt% |
| Fe: | 8-12wt% |
| Si: | 3-8wt% |
| Mo: | 7-10wt% |
| Inevitable impurities | 1wt% max, whereof C is below 0.05% |
| Balanced with nickel (Ni). | |

In still another embodiment of the present invention the nickel based brazing filler metal comprises:

| | |
|---|---|
| Cr: | 28-32wt% |
| Fe: | 8-12wt% |
| Si: | 3-8wt% |
| Mo: | 6-9wt% |
| Inevitable impurities | 0.5wt% max, whereof C is below 0.05% |
| Balanced with nickel (Ni). | |

In still another embodiment of the present invention the nickel based brazing filler metal comprises:

| | |
|---|---|
| Cr: | 28-32wt% |
| Fe: | 8-12wt% |
| Si: | 6-8wt% |
| Mo: | 6-9wt% |
| Inevitable impurities | 0.5wt% max, whereof C is below 0.05% |
| Balanced with nickel (Ni). | |

The brazing filler metal has a solidus temperature between 1140°C and 1220°C, the melting range (i.e. difference between liquidus temperature and solidus temperature) should be narrow i.e. below 100°C. Solidus and liquidus temperatures may be determined by Differential Scanning Calorimetry (DSC). The brazing filler metal has an excellent ability to flow and penetrate the gap to be brazed. Also the molten braze alloy is not eroding the base metal when it is molten because the well balanced composition of the new nickel based filler metal limits the driving force of diffusion into the base material. Erosion is defined as a condition caused by the dissolution of the base metal by the molten brazing filler metal, resulting in a reduction of the base metal thickness. Erosion always increases with higher brazing temperature because the diffusion rates of the elements are increasing with the temperature.
The brazing filler metal according to this invention may be in the form of powder which may be produced by either gas or water atomization. Depending on the application technique different particle size distribution is needed. When applied to the parts to be brazed the brazing filler metal, in this context denoted as a brazing filler metal material, may be in form of powder or in form of a paste, tape, or foil.

The brazing filler metal is suitable for vacuum furnace brazing or in reducing atmosphere with a dew point below - 30°C. In order to avoid or reduce evaporation of chromium, the vacuum furnace, after reaching a vacuum level of <10-3 Torr, may be backfilled with an inert or reducing gas to a pressure of some Torr.
The brazing filler metal has a solidus temperature of at least 1140°C and produce crack free joints with good corrosion resistance when brazed at 1200°C, or higher, without any observed grain growth. Because the brazing filler metal is acting on capillary forces, the wetting of the brazing filler metal on the base material to be brazed is crucial, a requirement the brazing filler metal according to the present invention fulfils excellently.

### EXAMPLES

As reference brazing filler metal Ni-29Cr-6P-4Si (Ni613) was used. Ni613 is a nickel based brazing filler metal produced by Höganäs AB, Sweden, and is the filler metal with the best corrosion resistance on the market.

Table 2 shows the chemical compositions of the samples according to the invention, comparative samples and the reference sample. The amount of each component is given in weight percent. The expression 'bal' (balance) means that the remaining material in the melt consists of Ni, and unavoidable impurities present in such a small amount that the presence of the component does not substantially influence the properties of the brazing filler material.

### EXAMPLE 1

### Melting range and flow.

A first criterion to be satisfied for the brazing filler material is that the solidus temperature is between 1140C and 1220°C. Furthermore the melting range should be narrow i.e. below 100°C. It can be seen in table 2 that the temperature at which the brazing filler metal melts and brazes is affected by phosphorous, manganese and silicon. The chemical analysis was performed according to known analytical methods, solidus liquidus temperatures were measured by Differential Scanning Calorimetry (DSC) analysis was run on a STA 449 F3 Jupiter instrument. The heating rate was set to 10K/min and the purge gas was Argon.

The flow was tested by putting a 0, 5g of brazing alloy on a flat stainless steel plate. Then the sample was brazed at a temperature above liquidus in high vacuum. After the brazing the molten alloy was studied and the area covered by molten alloy was measured. Large area is good as it shows god wetting which is required for good flow property. Also the alloy should not separate in two or more phases. That was also deemed as not acceptable. Good (acceptable), OK (acceptable) and Bad (not acceptable) were used to summarize the result of the flow test.

**Table 2 Composition of alloys, result of melting and flow tests.**

| Sample No. | P | Si | Mo | Ni | Cr | Fe | Mn | TSol °C | TLiq °C | Flow |
|---|---|---|---|---|---|---|---|---|---|---|
| 1 (comp) | 3 | 3.2 | 8.0 | bal. | 30.0 | 10.0 | | 1051 | 1150 | Good |
| 2 (comp) | 4 | 2.0 | 8.0 | bal. | 29.0 | 10.0 | | 1058 | 1173 | Good |
| 3 (comp) | 4 | 0.9 | 7.9 | bal. | 29.0 | 10.4 | | 1054 | 1204 | Bad |
| 4 (comp) | 3 | 1.9 | 8.0 | bal. | 30.0 | 10.0 | | 1062 | 1230 | Bad |
| 5 (comp) | | 12.3 | 7.6 | bal. | 28.8 | 11.6 | | 1000 | 1253 | Bad |
| 6 (comp) | | 10.4 | 7.5 | bal. | 28.7 | 11.2 | 5.8 | 1070 | 1250 | Bad |
| 7 (inv) | | 7.1 | 7.5 | bal. | 29.1 | 11.1 | | 1150 | 1210 | Good |
| 8 (comp) | 2.2 | 8.8 | 7.5 | bal. | 30.1 | 10.2 | | 1000 | 1176 | Good |
| 9 (comp) | 2.1 | 6.5 | 7.8 | bal. | 29.6 | 10.1 | | 990 | 1100 | Good |
| 10 (comp) | 1.1 | 9.6 | 7.5 | bal. | 29.4 | 10.7 | 2.9 | 990 | 1210 | Bad |
| 11 (comp) | | 11.0 | 7.6 | bal. | 28.9 | 11.5 | | 1023 | 1240 | Bad |
| 12 (comp) | 1.5 | 7.7 | 7.7 | bal. | 29.3 | 10.4 | 1.7 | 997 | 1120 | Bad |
| 13 (comp) | 1.1 | 9.4 | 7.7 | bal. | 29.2 | 10.6 | | 1000 | 1120 | Bad |
| 14 (inv) | | 3.1 | 7.5 | bal. | 28.7 | 11.1 | | 1195 | 1208 | OK |
| 15 (inv) | | 4.9 | 7.8 | bal. | 29.3 | 10.2 | | 1190 | 1227 | OK |
| 16 (comp) | | | 7.6 | bal. | 29.0 | 11.0 | | 1350 | 1380 | Bad |
| 17 (comp) | | 2.0 | 7.5 | bal. | 28.9 | 10.1 | | | | Bad |
| Ni613 (ref) | 7 | 4 | | bal. | 29.0 | | | 980 | 1030 | Good |

### EXAMPLE 2

### Braze test, inter metallic phases.

As reference the brazing filler metal powder Ni-29Cr-6P-4Si was used to braze steel plates of SMO654 at 1150°C in vacuum. The brazed joint was allowed to cool without any forced cooling to a temperature of 1000°C. Below this temperature forced cooling at a pressure of 10bar of nitrogen to a temperature of 500°C was applied. This sample was compared to a brazed sample according to the invention, sample no 7 brazed at 1250°C with steel plates of SMO654 using forced cooling at a pressure of 10bar of nitrogen, from 1150°C to a temperature of 500°C. The brazed samples were investigated by metallography to identify any inter metallic phases in the grain boundaries.

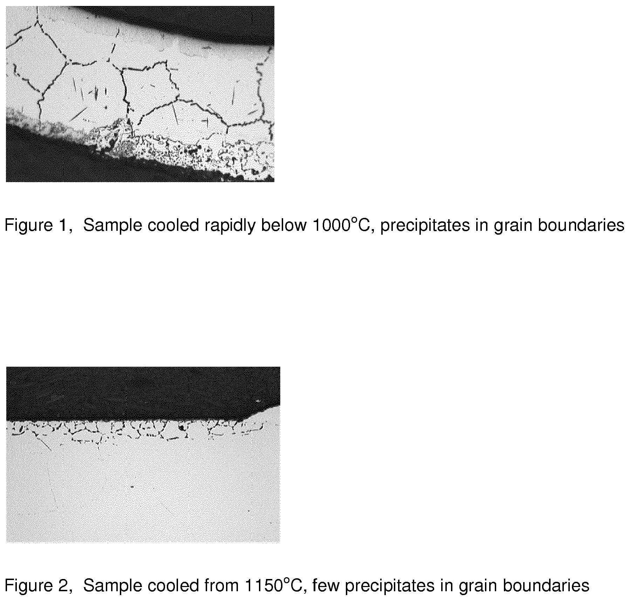

In the sample subjected to forced cooling from 1000° C, precipitates were found in the grain boundary all the way through the metal sheet, figure 1. In the second sample, forced cooled from 1150°C, using a brazing filler metal according to the invention, the amount of inter metallic phases were heavily reduced and the grain boundaries are only visible in the surface, figure 2.

### EXAMPLE 3

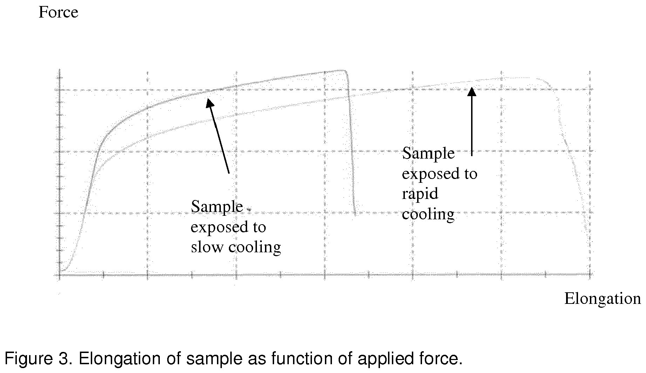

A pure SMO654 sheet was put in the furnace and heated to 1180°C and cooled slowly, i.e. without forced cooling. As reference a pure SMO654 sheet was put in the furnace at 1250°C and subjected to forced cooling from 1150°C, at a pressure of 10bar of nitrogen, to a temperature of 500°C. The two sheets were then tested for tensile test. The specimen not exposed to forced cooling is much less ductile, due to formation of intermetallic, than the specimen exposed to forced cooling from above 1150°C as shown by the stress-strain curve in. Figure 3.

### FIGURE LEGENDS

Figure 1, Sample cooled rapidly below 1000°C, precipitates in grain boundaries.
Figure 2, Sample forced cooled from 1150°C, few precipitates in grain boundaries.
Figure 3. Elongation of sample as function of applied force.

## Claims

1. A nickel based brazing filler metal consisting of:
| | |
|---|---|
| Cr: | 25-35wt% |
| Fe: | 7-15wt% |
| Si: | 3-8wt% |
| Mo: | 5-10wt% |
| Inevitable impurities | 1wt% max, whereof C is below 0.05% |
| Balanced with nickel (Ni). | |

2. A nickel based brazing filler metal according to claim 1 said metal consisting of:
| | |
|---|---|
| Cr: | 25-35wt% |
| Fe: | 7-15wt% |
| Si: | 3-8wt% |
| Mo: | 6-10wt% |
| Inevitable impurities | 1wt% max, whereof C is below 0.05% |
| Balanced with nickel (Ni). | |

3. A nickel based brazing filler metal according to claim 1 said metal consisting
| | |
|---|---|
| of: | |
| Cr: | 25-33wt% |
| Fe: | 8-12wt% |
| Si: | 3-8wt% |
| Mo: | 7-10wt% |
| Inevitable impurities | 1wt% max, whereof C is below 0.05% |
| Balanced with nickel (Ni). | |

4. A nickel based brazing filler metal according to any of claims 1-3 **characterised in that** the metal is present as a powder having mean particle size between 10 -150µm, preferably between 20-100µm, most preferably 30-70µm.

5. A nickel based brazing filler metal material according to any of claims 1-3 **characterized in that** brazing filler material is in form of powder, paste, strip or foil.

6. A method for brazing an article comprising at least two parts of stainless steel, comprising the steps of;
a) applying a brazing filler metal material according to any of claims 1-5 to at least one part of stainless steel or to a combination of parts of stainless steel and if applicable assembling parts of stainless steel to an article,
b) heating the article to the brazing temperature, a temperature above the liquidus temperature of the brazing filler metal, at least above 1200°C,
c) holding the part(s) at the brazing temperature until complete brazing is obtained,
d) cooling the brazed parts to a temperature below solidus of the brazed joint,
e) cooling the brazed parts from a temperature of at least 1050°C to 600°C or below at a minimum cooling rate of 2°C/sec with an inert cooling gas at a pressure of at least 10 bar,
f) recovering the article.

7. A method according to claim 6 wherein the at least one part of stainless steel is a super austenitic stainless steel.

8. Brazed product made according to any of claims 6-7.

9. Brazed product according to claim 8 being a heat exchanger.

## Patentansprüche

1. Zusatzmetall zum Hartlöten auf Nickelbasis bestehend aus:
| | |
|---|---|
| Cr: | 25-35 Gew.-% |
| Fe: | 7-15 Gew.-% |
| Si: | 3-8 Gew.-% |
| Mo: | 5-10 Gew.-% |
| unvermeidbaren Verunreinigungen | max. 1 Gew.-%, wovon C unter 0,05% liegt, |
| ausgefüllt mit Nickel (Ni). | |

2. Zusatzmetall zum Hartlöten auf Nickelbasis nach Anspruch 1, wobei das Metall aus Folgendem besteht:
| | |
|---|---|
| Cr: | 25-35 Gew.-% |
| Fe: | 7-15 Gew.-% |
| Si: | 3-8 Gew.-% |
| Mo: | 6-10 Gew.-% |
| unvermeidbaren Verunreinigungen | max. 1 Gew.-%, wovon C unter 0,05% |
| liegt, | |
| ausgefüllt mit Nickel (Ni). | |

3. Zusatzmetall zum Hartlöten auf Nickelbasis nach Anspruch 1, wobei das Metall aus Folgendem besteht:
| | |
|---|---|
| Cr: | 25-33 Gew.-% |
| Fe: | 8-12 Gew.-% |
| Si: | 3-8 Gew.-% |
| Mo: | 7-10 Gew.-% |
| unvermeidbaren Verunreinigungen | max. 1 Gew.-%, wovon C unter 0,05% liegt, |
| ausgefüllt mit Nickel (Ni). | |

4. Zusatzmetall zum Hartlöten auf Nickelbasis nach einem der Ansprüche 1 bis 3, **dadurch gekennzeichnet, dass** das Metall als ein Pulver mit einer mittleren Partikelgröße zwischen 10 und 150 µm, vorzugsweise zwischen 20 und 100 µm, am meisten bevorzugt zwischen 30 und 70 µm, vorliegt.

5. Zustatzmetallwerkstoff zum Hartlöten auf Nickelbasis nach einem der Ansprüche 1 bis 3, **dadurch gekennzeichnet, dass** der Zusatzwerkstoff zum Hartlöten in Form von Pulver, Paste, Streifen oder Folie vorliegt.

6. Verfahren zum Hartlöten eines Gegenstandes, der mindestens zwei Teile aus Edelstahl umfasst, das die folgenden Schritte umfasst;
a) Aufbringen eines Zusatzmetallwerkstoffs zum Hartlöten nach einem der Ansprüche 1 bis 5 auf mindestens einen Teil aus Edelstahl oder auf eine Kombination von Teilen aus Edelstahl und gegebenenfalls Montieren von Teilen aus Edelstahl auf einen Gegenstand,
b) Erwärmen des Gegenstands auf die Hartlöttemperatur, eine Temperatur oberhalb der Liquidustemperatur des Zusatzmetalls zum Hartlöten, mindestens jedoch oberhalb von 1200°C,
c) Halten des/der Teile bei der Hartlöttemperatur, bis das vollständige Hartlöten abgeschlossen ist,
d) Abkühlen der hartgelöteten Teile auf eine Temperatur unterhalb des Solidus der Hartlötverbindung,
e) Abkühlen der hartgelöteten Teile von einer Temperatur von mindestens 1050°C auf 600°C oder darunter bei einer minimalen Abkühlrate von 2°C/s. mit einem inerten Kühlgas bei einem Druck von mindestens 10 bar,
f) Gewinnen des Gegenstands.

7. Verfahren nach Anspruch 6, wobei der mindestens eine Teil aus Edelstahl ein superaustenitischer Edelstahl ist.

8. Hartgelötetes Produkt, das nach einem der Ansprüche 6 bis 7 hergestellt ist.

9. Hartgelötetes Produkt nach Anspruch 8, das ein Wärmeaustauscher ist.

## Revendications

1. Métal d'apport pour brasage à base de nickel, constitué de :
| | |
|---|---|
| Cr : | 25-35 % en poids |
| Fe : | 7-15 % en poids |
| Si : | 3-8 % en poids |
| Mo : | 5-10 % en poids |
| impuretés inévitables | 1 % en poids max., dont C est inférieur à 0,05 % |
| le reste étant du nickel (Ni). | |

2. Métal d'apport pour brasage à base de nickel selon la revendication 1, ledit métal étant constitué de :
| | |
|---|---|
| Cr : | 25-35 % en poids |
| Fe : | 7-15 % en poids |
| Si : | 3-8 % en poids |
| Mo : | 6-10 % en poids |
| impuretés inévitables | 1 % en poids max., dont C est inférieur à 0,05 % |
| le reste étant du nickel (Ni). | |

3. Métal d'apport pour brasage à base de nickel selon la revendication 1, ledit métal étant constitué de :
| | |
|---|---|
| Cr : | 25-33 % en poids |
| Fe : | 8-12 % en poids |
| Si : | 3-8 % en poids |
| Mo : | 7-10 % en poids |
| impuretés inévitables | 1 % en poids max., dont C est inférieur à 0,05 % |
| le reste étant du nickel (Ni). | |

4. Métal d'apport pour brasage à base de nickel selon l'une quelconque des revendications 1 à 3, **caractérisé en ce que** le métal se présente sous forme de poudre présentant une taille de particule moyenne comprise entre 10 et 150 µm, de préférence entre 20 et 100 µm, de manière la plus préférée 30 à 70 µm.

5. Matériau métallique d'apport pour brasage à base de nickel selon l'une quelconque des revendications 1 à 3, **caractérisé en ce que** le matériau d'apport pour brasage se présente sous la forme de poudre, de pâte, de ruban ou de feuille.

6. Procédé de brasage d'un article comprenant au moins deux pièces en acier inoxydable, comprenant les étapes consistant à :
a) appliquer un matériau métallique d'apport pour brasage selon l'une quelconque des revendications 1 à 5 sur au moins une pièce en acier inoxydable ou sur une combinaison de pièces en acier inoxydable et, le cas échéant, assembler des pièces en acier inoxydable pour former un article,
b) chauffer l'article à la température de brasage, une température supérieure à la température de liquidus du métal d'apport pour brasage, au moins supérieure à 1200 °C,
c) maintenir la/les pièce(s) à la température de brasage jusqu'à obtention d'un brasage complet,
d) refroidir les pièces brasées à une température inférieure au solidus du joint brasé,
e) refroidir les pièces brasées d'une température d'au moins 1050 °C à 600 °C ou moins à une vitesse de refroidissement minimale de 2 °C/s avec un gaz de refroidissement inerte à une pression d'au moins 10 bar,
f) récupérer l'article.

7. Procédé selon la revendication 6, dans lequel l'au moins une pièce en acier inoxydable est un acier inoxydable super-austénitique.

8. Produit brasé fabriqué selon l'une quelconque des revendications 6 à 7.

9. Produit brasé selon la revendication 8, qui est un échangeur de chaleur.
